# EUROPÄISCHE PATENTANMELDUNG

(11) **EP 2 341 018 A1**
(43) Veröffentlichungstag der Anmeldung: **06.07.2011**
(21) Anmeldenummer: 10016189.2
(22) Anmeldetag: 30.12.2010
(51) Int. Cl.: B65G 53/46

(54) **Zellenradschleuse sowie Förderanlage zum Fördern von Schüttgut**

(30) Priorität: 31.12.2009 DE 202009017709 U
(71) Anmelder: Opitz, Günther, 45721 Haltern a. See (DE); Matuschak, Hans-Dieter, 45966 Gladbeck (DE)
(72) Erfinder: Opitz, Günther, 45721 Haltern a. See (DE); Matuschak, Hans-Dieter, 45966 Gladbeck (DE)
(74) Vertreter: Knauer, Joachim

(57) **Zusammenfassung**

Die Erfindung betrifft eine Zellenradschleuse (1) für Schüttgut, insbesondere Spritzbeton, mit einem Zellenradraum (20) und einem im Zellenradraum (20) angeordneten Zellenrad (21), das mit einer Antriebswelle (23) drehfest verbindbar ist, wobei das Zellenrad (21) und der Zellenradraum (20) konisch ausgebildet sind und eine Schüttgutausblasvorrichtung (S) vorgesehen ist. Die Erfindung betrifft ferner eine Förderanlage, ein Verfahren zum Fördern von Schüttgut sowie eine Hülse.

## Beschreibung

### TECHNISCHES GEBIET

Die Erfindung betrifft eine Zellenradschleuse, eine Förderanlage, ein Verfahren zum Fördern von Schüttgut sowie eine Hülse für eine Zellenradschleuse nach dem Oberbegriff des Anspruchs 1, 7, 12 bzw. 14.

### TECHNOLOGISCHER HINTERGRUND

Bei der Förderung von Schüttgut wie etwa trockenem Spritzbeton aus einem Behälter oder Silo in eine Leitung zur weiteren Verarbeitung, insbesondere zur Mischung mit Wasser und zum bauseitigen Aufspritzen, ist Druckluft erforderlich. Allerdings darf die Druckluft nicht in den Behälter gelangen. Zur Trennung einer Austragvorrichtung, die mit Druckluft arbeitet, und dem Behälter ist daher eine Schleuse erforderlich.

Eine derartige Schleuse ist aus der DE 26 37 778 bekannt. Es handelt sich dabei um eine Zellenradschleuse, welche an einem Vorratssilo oder Vorratsbunker angeschlossen ist, und welche die Aufgabe eines Dosierorgans erfüllt. Das Schüttgut befindet sich unter atmosphärischen Druck in dem Silo, wird in die Zellenradschleuse eingeleitet, und von dort in eine Förderleitung durch Drehung des Zellenrades befördert. Die pneumatische Förderleitung ist dabei mit einem Überdruck beaufschlagt, der üblicherweise einen Maximaldruck von 6 bar nicht übersteigt.

Zur Vereinfachung des Ein- bzw. Ausbaus des Zellenrades aus dem Gehäuse einer Zellenradschleuse schlägt die DE 10 2005 051 630 A1 vor, das Zellenrad konisch auszuführen. Auf diese Weise kann beispielsweise nach dem Öffnen eines stirnseitig angeordneten Deckels im Gehäuse der Zellenradschleuse durch eine kurze seitliche Bewegung das Zellenrad von der innenseitigen Wandung des Zellenradraumes derart weit abgerückt werden, dass das Zellenrad ohne zu Verkanten bzw. zu Verklemmen aus dem Gehäuse seitlich entnehmbar ist.

Aufgrund der starken reibungsbedingten Beanspruchung der Innenseite des Zellenradraumes und der sich daran entlang bewegenden Bestandteile des Zellenrades beim Förderbetrieb der Zellenradschleuse, bedürfen Schleusen dieser Art einer häufigen und regelmäßigen Wartung. Dabei müssen alle durch Reibung beanspruchten Komponenten, insbesondere die Kanten der Zellenradwände und die Innenseite des Zellenradraumes beispielsweise regelmäßig durch Vulkanisieren mit einem abdichtenden Material versehen werden. Derartige häufig wiederholte Wartungs- und Instandhaltungsarbeiten verkürzen die Standzeit gattungsgemäßer Fördervorrichtungen drastisch.

Ein weiteres Problem bei Zellenradschleusen der eingangserwähnten Art besteht darin, dass der Volumenfluss des Schüttgutes durch die Schleuse förderbedingten Schwankungen unterliegt. Die Schwankungen entstehen dadurch, dass das Schüttgut durch die Zellen bei seinem Transport portioniert wird. Eine Möglichkeit derartige Schwankungen im Volumenfluss zu reduzieren bestünde beispielsweise darin, die Anzahl der Zellen pro Zellenrad zu erhöhen. Dadurch werden die Portionen zwar kleiner, aber bei hinreichend hoher Drehzahl des Zellenrades wird der Volumenfluss insgesamt homogenisiert. Jedoch ist dabei zu beachten, dass mit steigender Drehzahl des Zellenrades aufgrund der steigenden Reibung und der damit verbundenen steigenden Wärmebildung der Wartungsaufwand der Zellenradschleuse steigt.

### DARSTELLUNG DER ERFINDUNG

Vor diesem Hintergrund liegt der Erfindung die Aufgabe zugrunde, eine Zellenradschleuse, ein Förderanlage, ein Verfahren zum Fördern von Schüttgut sowie eine Hülse für eine Zellenradschleuse nach dem Oberbegriff des Anspruchs 1, 7, 12 bzw. 14 zu schaffen, die hinsichtlich der Wartung und der Homogenität des Volumenflusses des Schüttgutes optimiert sind.

Diese Aufgabe wird durch die Merkmale der Ansprüche 1, 7, 12 bzw. 14 gelöst.

Demnach wird eine Zellenradschleuse für Schüttgut, insbesondere Spritzbeton, mit einem Zellenradraum und einem im Zellenradraum angeordneten Zellenrad, das mit einer Antriebswelle drehfest verbindbar ist, geschaffen, bei der das Zellenrad und der Zellenradraum konisch ausgebildet sind und eine Schüttgutausblasvorrichtung vorgesehen ist.

Eine Verstellvorrichtung kann vorgesehen sein, mit der das Zellenrad innerhalb des Zellenradraums in axialer Richtung verstellbar und an die innenseitige Wand des Zellenradraumes anpassbar ist. Durch diese Verstellvorrichtung kann das Zellenrad in Richtung des kleineren Querschnitts verschoben werden. Die Verschiebung erfolgt innerhalb des Zellenradraumes. Ein Öffnen des Gehäuses der Zellenradschleuse und somit ein Wechsel einer Dichtung ist nicht erforderlich. Durch die Verstellvorrichtung wird der Anpressdruck der Zellenradwände an die Bewandung des Zellenradraumes erhöht, wodurch die Dichtigkeit der Zellen zur Wandung des Zellenradraumes hergestellt wird. Der Anpressdruck kann dabei an diejenigen Bedingungen angepasst werden, die durch die Art des Schüttgutes vorgegeben sind. Zur Begrenzung der Zellen kann es dabei zweckmäßig sein wenn das Zellenrad stirnseitig zumindest eine, vorzugsweise jedoch je zwei Stirnflächen aufweist. Die Stirnflächen können an dem Zellenrad befestigbar sein. Die Verstellvorrichtung kann vorzugsweise im Bereich der Antriebswelle angeordnet sein. Es ist zweckmäßig, wenn die Verstellvorrichtung von außerhalb des Gehäuses der Zellenradschleuse zugänglich ist. Erfindungsgemäß wird somit ermöglicht, dass Zellenrad und Zellenradraum über eine längere Betriebsdauer dichtend aneinander angepasst sind. Das Auswechseln von reibungsbedingt veschlissenen Komponenten der Zellenradschleuse ist dadurch weniger oft erforderlich, wodurch die Standzeit der Schleuse erhöht wird. Insgesamt wir die Schleuse dadurch wartungsfreundlicher.

Es kann zweckmäßig sein, wenn das Gehäuse zumindest einen Deckel aufweist mit dem der Zellenradraum verschließbar ist. Wahlweise kann etwa an einer oder an beiden Stirnseiten des Gehäuses ein Deckel angeordnet sein. Die drehbare Lagerung der Antriebswelle kann in dem oder in den Deckeln erfolgen. Alternativ dazu können auch ein oder mehrere Drehläger vorgesehen sein, die außerhalb der Deckel anzutreffen sind. Die Lagerung der Antriebswelle kann auch außerhalb des Gehäuses stattfinden, wobei in diesem Fall in dem oder in den Deckeln eine Wellendurchführung mit entsprechender Dichtung vorgesehen sein sollte. Durch die Ausrüstung des Gehäuses mit einem oder mehreren stirnseitig angeordneten Deckeln wird das Auswechseln innenseitiger Komponenten der Zellenradschleuse vereinfacht, was sich im Hinblick auf die Wartung der Vorrichtung günstig auswirkt. Es kann auch vorgesehen sein, dass die erfindungsgemäße Verstellvorrichtung in einem der Deckel angeordnet ist. Die Ausführung der Verstellvorrichtung kann dabei beispielsweise einen Teller umfassen, der auf die Stirnseite des Zellenrades in axialer Richtung einen variablen Druck ausübt.

Zweckmäßiger Weise ist zwischen dem Deckel und dem Gehäuse der Zellenradschleuse eine Dichtungsanordnung vorgesehen. Die Dichtung kann ein oder mehrstufig sein, wobei auch eine Labyrinthdichtung verwendet werden kann, welche einfach auszutauschen und somit im Hinblick auf die Wartungsfreundlichkeit vorteilhaft ist.

Bei einer weiteren Ausführungsform der erfindungsgemäßen Zellenradschleuse weist die innenseitige Wandung des Zellenradraumes eine Schicht aus einem Polymer auf, welcher vorzugsweise aus einem Polyuretan (PU) und/oder Polyester-Uretan-Kautschuk (AU) gebildet wird. Polyuretane dieser Art sind unter der Produktbezeichnung "Vulkollan" oder "Urepan" bekannt. Die massiven Varianten dieser Polymere zeichnen sich durch ihre hohe chemische und mechanische Beanspruchbarkeit aus, wobei sie gleichzeitig elastische Eigenschaften haben. Durch die Anordnung einer entsprechenden Polymerschicht an der innenseitigen Wandung des Zellenradraumes ist es möglich, das Zellenrad mit Hilfe der erfindungsgemäßen Verstellvorrichtung dicht an den Zellenradraum anzupassen. Alternativ zu der Polymerbeschichtung kann auch eine metallische oder eine keramische Beschichtung vorgesehen sein.

Zweckmäßigerweise ist die Schicht Bestandteil einer Hülse oder durch die Hülse gebildet, welche in dem Zellenradraum innenseitig angeordnet ist. Eine derartige Hülse ist ein einfach austauschbares Verschleißteil und bietet sowohl im Hinblick auf die Herstellung als auch auf die Wartung Vorteile. Im Bedarfsfall wird die Zellenradschleuse etwa an ihrem Deckel geöffnet, das Zellenrad entnommen und die mit der abdichtenden Beschichtung versehene Hülse ausgetauscht. Die Hülse ist konisch und kann Gummi, PU, AU oder dergleichen umfassen oder daraus gebildet sein. Vorzugsweise ist die Hülse an den Kontaktstellen zwischen Zellenrad und Zellenradraum verdickt. Hierzu kann vorteilhaft eine einen- oder beidenends umlaufende und ggf. geringfügig vom Rand beabstandete, insbesondere ringförmige und innenseitige, Verdickung gebildet sein.

Der Antriebswelle ist ein Antrieb zugeordnet, welcher einen Motor umfasst, insbesondere einen Elektromotor. Der Antrieb kann außerhalb des Gehäuses angeordnet sein. Die Trennung von Zellenradschleuse und Antrieb ermöglicht einen Austausch des Antriebs bzw. Wartungsarbeiten am Antrieb ohne dass die Zellenradschleuse davon betroffen ist. Vorteilhafterweise umfasst der Antrieb eine Getriebe und/oder eine Kupplung. Die Kupplung hat nicht zuletzt auch die Funktion einer mechanischen Entkopplung zwischen Schleuse und Antrieb, wodurch sowohl die Lebensdauer des Antriebs als auch die der Schleuse erhöht wird, da mechanische Schwingungen von dem einen Bauteil auf das andere Bauteil so kaum übertragen werden. Es kann auch vorteilhaft sein, wenn der erfindungsgemäße Verstellmechanismus im Bereich der Kupplung angeordnet ist.

In einer vorteilhaften Ausgestaltung der erfindungsgemäßen Zellenradschleuse kann zudem vorgesehen sein, dass das Zellenrad mehrere Zellen aufweist, die jeweils durch eine Zellenwand voneinander getrennt sind, wobei jede Zellenwand außen an die Wandung des Zellenradraumes und innen an eine Zellenradnabe anschließt. Dabei sind die Zellen gleichmäßig über den Umfang des Zellenrades verteilt angeordnet. Vorzugsweise ist die Anzahl der Zellen größer als 6 und kleiner als 16. Als besonders vorteilhaft erwiesen haben sich Zellenräder mit 9 oder 12 Zellen. Weist das Zellenrad beispielsweise 9 Zellen auf, kann eine Zelle etwa 1 kg Schüttgut aufnehmen. Verfügt das Zellenrad über 12 Zellen kann jede einzelne Zelle etwa 0,5 kg Schüttgut aufnehmen. Je größer die Anzahl der Zellen des Zellenrades ist, desto gleichmäßiger ist der Durchsatz bzw. der Volumen- oder Massenstrom des Schüttgutes durch die gesamte Zellenradschleuse. Je kleiner die Anzahl der Zellen ist, desto geringer sind die Reibungsverluste der Zellenradwände an der inneren Wandung des Zellenradraumes. Insofern stellt die Anzahl von 9 bzw. 12 Zellen ein Optimum hinsichtlich der Reibungsverluste einerseits und des Volumenstroms andererseits dar. Somit bewirkt ein derart gestaltetes Zellenrad zum Einen eine Verbesserung des Volumendurchsatzes und zum Anderen einen geringeren Wartungsaufwand. Es kann hinsichtlich der Beschaffenheit des Zellenrades zweckmäßig sein, die Zellenwände insbesondere deren Ränder und die Stirnseiten des Zellenrades mit einer Beschichtung zu versehen. Diese Beschichtung kann aus einem Kunststoff oder einem Metall oder einem keramischen Werkstoff gebildet sein. Beschichtete Zellenräder weisen eine höhere Verschleißbeständigkeit auf. Vorteilhafterweise ist die Zulauföffnung der Zellenradschleuse oberseitig angeordnet. Dadurch kann das Schüttgut aufgrund der Schwerkraft aus einem an der Zulauföffnung angeschlossenen Behälter in die Zellenradschleuse eingefüllt werden. Eine gesonderte Förderung des Schüttgutes in die Schleuse hinein entfällt somit. Ein weiterer Vorteil bei dieser Schwerkraftbeschickung besteht außerdem darin, dass Fremdkörper, die sich in dem Schüttgut befinden, in eine Zelle der Zellenradschleuse hineinfallen und somit nicht zwangsläufig an der Wandug des Zellenradraumes entlang geschleift werden und dort Riefen hinterlassen. Bei derartigen Fremdkörpern kann es sich etwa um Steine handeln, die sich in einem ansonsten aus einem Pulver gebildeten Schüttgut befinden. Somit ergibt sich durch die Schwerkraftbeschickung in Folge der oberseitigen Anordnung der Zulauföffnung letztlich ein geringerer Verschleiß der Schleusenkomponenten und somit ein geringerer Wartungsaufwand.

Vorteilhafterweise ist die Auslassöffnung unterseitig angeordnet. Auch hier hat die Schwerkraft eine unterstützende Wirkung hinsichtlich der Entleerung der Schleuse.

Bei einer weiteren Ausgestaltung der erfindungsgemäßen Zellenradschleuse ist die Drucklufteinlassöffnung so angeordnet, dass sie in Richtung der Symmetrieachse einen Versatz zu der Position der Auslassöffnung aufweist. Es kann beispielsweise vorgesehen sein, dass sich Drucklufteinlassöffnung und Auslassöffnung beide unterseitig am Gehäuse der Zellenradschleuse befinden. Beide Öffnungen liegen dabei in einer Flucht, welche zur Symmetrieachse des Gehäuses bzw. zur Richtung der Antriebswelle parallel verläuft. Diese benachbarte Anordnung von Drucklufteinlassöffnung und Auslassöffnung hat den Vorteil, dass die Zelle bei einer Druckluftbeschickung besser ausgeblasen werden kann. Somit wird der Volumenstrom erhöht, da die Zelle fast vollständig durch die Druckluft entleert wird. Gleichzeitig wird dadurch bei geeigneter Drehzahl der Zellenradschleuse und geeigneter Anzahl der Zellen des Zellenrades der Volumenstrom homogenisiert. Die Auslassöffnung und die Drucklufteinlassöffnung sind zweckmäßigerweise mit Flanschen direkt an dem Gehäuse der erfindungsgemäßen Zellenradschleuse angeschlossen und mit dem Zellenradraum verbunden. So kann die Zellenradschleuse mit einem Druck oberhalb von etwa 6 bar, vorzugsweise bis zu etwa 12 bar betrieben werden.

Bei einer besonderen Ausführungsform der erfindungsgemäßen Zellenradschleuse kann vorgesehen sein, dass das Zellenrad in axialer Richtung stufig verstellbar ist. Die Verstellung kann dabei durch ein Rastelement erfolgen, welches in Bereich der Verstellvorrichtung angeordnet ist. Alternativ dazu kann die Verstellung auch kontinuierlich erfolgen, was beispielsweise durch eine Gewindeanordnung mit einem Feingewinde oder einer Spindel verwirklicht werden kann.

Zweckmäßigerweise sind Mittel zur Schmierung des Zellenrades in den Zellenradraum vorgesehen. Dadurch, dass der Anpressdruck des Zellenrades an die innenseitige Wandung des Zellenradraumes durch die erfindungsgemäße Verstellvorrichtung anpassbar ist, kann die Dichtigkeit bzw. der Reibungsaufwand an die Beschaffenheit des zu fördernden Schüttgutes angepasst werden. Auf diese Weise wird eine übermäßige Erhitzung der Zellenradschleuse vermieden. Somit bedarf es neben der Schmierung des Zellenrades keiner Kühlung. Auch diese Eigenschaft der erfindungsgemäßen Zellenradschleuse reduziert den Wartungsbedarf. Mittel zur Kühlung sind nicht erforderlich und brauchen somit auch nicht gewartet werden.

Es erweist sich als zweckmäßig, wenn ein Modul zur Überwachung des Anpressdrucks des Zellenrades an die Wandung des Zellenraumes vorgesehen ist. Auf diese Weise wird die Verstellung des Zellenrades zur Herstellung einer ausreichenden Dichtung zwischen Zellenrad und Wandung nachvollziehbar und gegebenenfalls auch automatisierbar. Ebenso kann ein Modul zur Überwachung des Schüttgutdrucks im Bereich der Zulauföffnung oder im Bereich der Auslassöffnung vorgesehen sein. Beide Module können beispielsweise mit einer Steuereinheit verbunden sein, wodurch die Automatisierung der Verstellung präziser erfolgen kann. Wahlweise kann auch eine Temperaturüberwachung vorgesehen sein, mit der Wärmeschwankungen oder eine thermisch bedingte Längenänderung von beteiligten Komponenten und damit verbundene Schwankungen der Dichtigkeit ausgeglichen werden können.

Die anmeldungsgemäße Aufgabe wird auch durch eine eingangs beschriebene Förderanlage gelöst, bei der die Zulauföffnung der Schüttgut-Fördervorrichtung direkt an die Schüttgutöffnung des Behälters angeschlossen ist. Somit ist das Schüttgut durch die Wirkung der Schwerkraft in die Fördervorrichtung einfüllbar. Erfindungsgemäß sind die Druckluftzuleitung und die Schüttgutförderleitung derart an der Schüttgut-Fördervorrichtung angeschlossen, dass in der Schüttgut-Fördervorrichtung ein Kanal gebildet wird, in dem das Schüttgut zur Förderung in der Schüttgutförderleitung über die Druckluftzuleitung mit Druckluft beaufschlagbar ist. Dabei wird die Schüttgut-Fördervorrichtung vorzugsweise durch die erfindungsgemäße Zellenradschleuse gebildet. Zweckmäßigerweise wird die Förderanlage pneumatisch betrieben. Durch die Bildung des Kanals wird die Zelle im Wesentlichen vollständig ausgeblasen, wodurch der Volumenfluss einerseits erhöhnt wird und andererseits dauerhaft konstant gehalten werden kann. Außerdem bleiben somit weniger Schüttgutreste in der Kammer zurück. Der fast vollständige Entfall von Schüttgutresten in der bereist ausgeblasenen Kammer bewirkt ebenfalls einen geringeren Verschleiß, da weniger Schüttgut unnötigerweise mehrere Zellenradzyklen durchläuft und dabei zum verschleiß der Schleusenkomponenten beiträgt.

Ferner kann der Kanal der erfindungsgemäßen Förderanlage eine Abwinkelung und/oder eine Krümmung aufweisen, wobei die Krümmung vorzugsweise bogenartig ist. Diese Gestaltung des Kanals kann dadurch erreicht werden, dass sowohl die Drucklufteinlassöffnung als auch die Auslassöffnung über Flansche am Gehäuse der Schüttgut-Fördervorrichtung angeordnet sind, welche unter einem stumpfen Winkel angebracht sind. Die stumpfwinklige Anordnung der Flansche bewirkt eine Kanalbildung mit Abwinklung und Krümmung und somit eine Begünstigung des Flusses des mit Druckluft beaufschlagten Schüttgutes in der Fördervorrichtung.

Vorteilhalfterweise ist zwischen dem Behälter und der Schüttgutöffnung ein Dosierungsmittel zur Dosierung des Schüttgutes angeordnet. Vorzugsweise kann es sich bei dem Dosierungsmittel um einen Schieber, wahlweise auch um einen motorisierten Schieber handeln. Durch einen solchen Flanschschieber kann die Zuflussmenge in die Schüttgut-Fördervorrichtung bzw. in die erfindungsgemäße Zellenradschleuse geregelt werden. Die Zuflussmenge kann dadurch auch unterbrochen werden, was beispielsweise bei einer Fehlfunktion der Zellenradschleuse sinnvoll sein kann. Diese Zuflussdosierung bzw. Zuflussunterbrechung kann beispielsweise auch so beschaffen sein, das sie an einem elektronischen Regelmodul anschließbar ist.

Bei einer besonderen Ausführungsform der erfindungsgemäßen Förderanlage kann zwischen der Druckluftzuleitung und der Schüttgutförderleitung eine Bypassleitung vorgesehen sein, deren Querschnitt vorzugesweise durch einen Bypassventil steuerbar ist. Die Bypassleitung bewirkt einen Druckausgleich zwischen der Drucklufteinlassleitung und der Schüttgutförderleitung.

In einer besonderen Ausgestaltung der erfindungsgemäßen Förderanlage kann zudem vorgesehen sein, dass die Weiterverarbeitung eine Flüssigkeitszugabe umfasst, welche einen Flüssigkeitsanschluss an eine Flüssigkeitsversorgung und ein Flüssigkeitsmengenventil umfasst, wobei das Ventil vorzugsweise regelbar ist. Handelt es sich bei dem zu fördernden Schüttgut beispielsweise um Beton, so kann dieser in der Weiterverarbeitung mit Wasser zu Spritzbeton versetzt werden. Mit dem Flüssigkeitsmengenventil kann dabei das Verhältnis von Spritzbeton/Wasservolumen geregelt werden.

Es kann darüber hinaus zweckmäßig sein, dass bei der erfindungsgemäßen Förderanlage ein Druckwächter vorgesehen ist, welcher vorzugsweise an der Schüttgutförderleitung angeschlossen ist. Mit dem Druckwächter kann der Druck in der Schüttgutförderleitung überprüft werden. Bei Abweichungen des überprüften Druckes von einem vorgegebenen Solldruck kann beispielsweise durch Veränderung der Fördermenge der Schüttgut-Fördervorrichtung der Schüttgutförderdruck angepasst werden.

Dazu ist es zweckmäßig, dass die Schüttgut-Fördervorrichtung einen Fördermengenregler aufweist. Handelt es sich der Schüttgut-Fördervorrichtung beispielsweise um die erfindungsgemäße Zellenradschleuse, so kann die Fördermengenregelung einen Drehzahlregler umfassen, mit welchem die Drehzahl des Zellenrades in der Zellenradschleuse und somit das pro Zeit geförderte Schüttgutvolumen variierbar ist. Durch Regelung der Drehzahl kann somit der Volumenfluss des zu fördernden Schüttgutes beeinflusst werden.

In einer weiteren Ausführungsform der erfindungsgemäßen Förderanlage ist ein Regelmodul, an welchem die Steuerungen eines Kompressors, einer Schüttgutfördervorrichtung, eines Dosierungsmittels, eines Bypassventils, eines Flüssigkeitsmengenventils, eines Druckwächters und oder eines Fördermengenreglers derart anschließbar sind, dass die Förderung durch das Regelmodul regelbar und vorzugsweise automatisierbar ist. In erster Linie bewirkt die Regelung durch das erfindungsgemäße Regelmodul eine Homogenisierung des Volumenflusses. Durch diese Homogenisierung wird die Qualität des Spritzbetons letztlich deutlich verbessert. Zusätzlich kann bei Verwendung einer erfindungsgemäßen Zellenradschleuse während des Betriebs der Förderanlage die Verstellung des Zellenrades in die Steuerung beziehungsweise Regelung integriert werden, so dass die Position des Zellenrades im Zellenradraum bei Verschlechterung der Dichtwirkung automatisch nachgestellt wird.

Eine Reduzierung des Wartungsaufwandes bei gleichzeitiger Vermeidung einer Beeinträchtigung der Homogenität des Volumenflusses des Schüttgutes wird auch durch ein eingangs beschriebenes Verfahren gemäß Anspruch 24 erreicht, bei dem der Druck in der Schüttgutförderleitung durch einen Druckwächter überwacht wird, der an ein Regelmodul angeschlossen ist. Dabei regelt das Regelmodul über einen Fördermengenregler die Fördermenge der Förderungsstufe. Wird in der Förderungsstufe die Schüttgutförderung beispielsweise durch eine erfindungsgemäße Förderanlage durchgeführt, wird die Regelung der Fördermenge zweckmäßigerweise mit Hilfe des Regelmoduls und eines daran angeschlossenen Drehzahlenregler erreicht. Die im Regelkreis integrierte Drehzahlsteuerung bewirkt eine Homogenisierung des Volumenflusses, wodurch das Verfahren kontinuierlich betrieben werden kann. Eine ständige manuelle Veränderung der Verfahrensparameter ist somit nicht erforderlich, wodurch das Verfahren insgesamt gleichmäßiger und für die am Verfahren beteiligten Aggregate schonender durchgeführt werden kann.

Bei einer vorteilhaften Ausgestaltung des erfindungsgemäßen Verfahrens kann vorgesehen sein, dass die Beimischung der Flüssigkeit in der Weiterverarbeitungsstufe durch das Regelmodul derart gesteuert wird, dass das Mischungsverhältnis Flüssigkeit / Schüttgut im Wesentlichen konstant bleibt. Durch diese Regelung kann die Qualität des Spritzbetons deutlich erhöht werden, so dass der Spritzbeton zukünftig auch für Bereiche einsetzbar wird, in denen eine hohe Festigkeit des Beton erforderlich ist. Zudem kann die Regelung auch eine Temperaturüberwachung innerhalb der Förderungsstufe umfassen, so dass eine Überhitzung der beteiligten Aggregate in der Förderungsstufe vermieden werden kann. Sollte die Förderungsstufe über eine erfindungsgemäße Zellenradschleuse verfügen, so kann vorgesehen sein, dass das Regelmodul auch die Verstellung des Zellenrades innerhalb der Zellenradschleuse steuert. Darüber hinaus kann eine Steuerung des Pipersventils und eines Dosierungsmittels vorgesehen sein, sofern die Förderungsstufe darüber verfügt. Ebenso kann auch der Kompressor der pneumatisch betriebenen Förderungsstufe durch das Regelmodul steuerbar sein.

Weitere Merkmale, Eigenschaften und Ausführungsformen der Erfindung ergeben sich aus den Ansprüchen, der vorstehenden und der nachfolgenden Beschreibung sowie den Figuren, die Ausführungsbeispiele einer Zellenradschleuse, einer Förderanlage für Schüttgut und eines Verfahrens zur Förderung von Schüttgut illustrieren. Einzelne Merkmale der Ansprüche oder Ausführungsformen können mit anderen Merkmalen anderer Ansprüche und Ausführungsformen kombiniert werden.

### KURZBESCHREIBUNG DER FIGUREN

Fig. 1 zeigt eine Förderanlage.
Fig. 2 zeigt einen Schnitt entlang der Linie A-A der Fig. 1.
Fig. 4 zeigt einen Schnitt entlang der Linie B-B der Fig. 2.

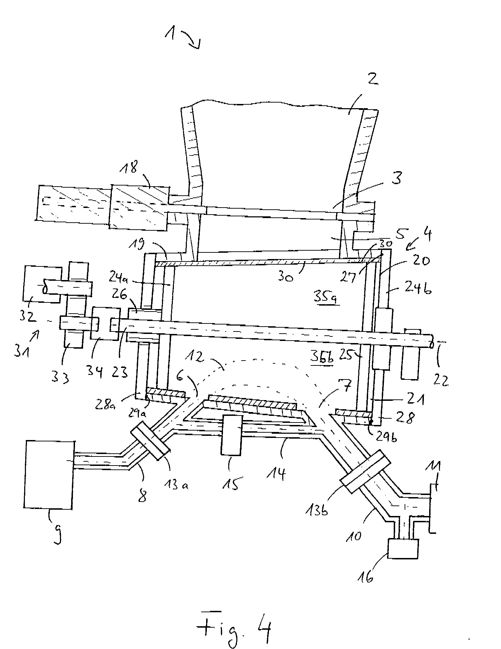

Fig. 4 zeigt einen Schnitt durch eine weitere Ausführungsform.

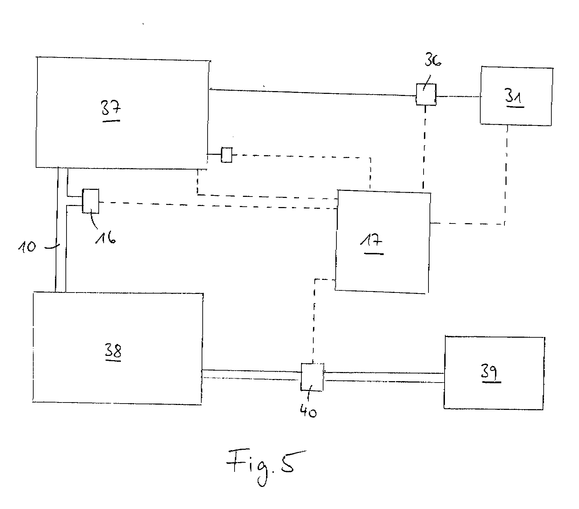

Fig. 5 ist eine schematische Darstellung eines Verfahrens zur Förderung von Schüttgut.

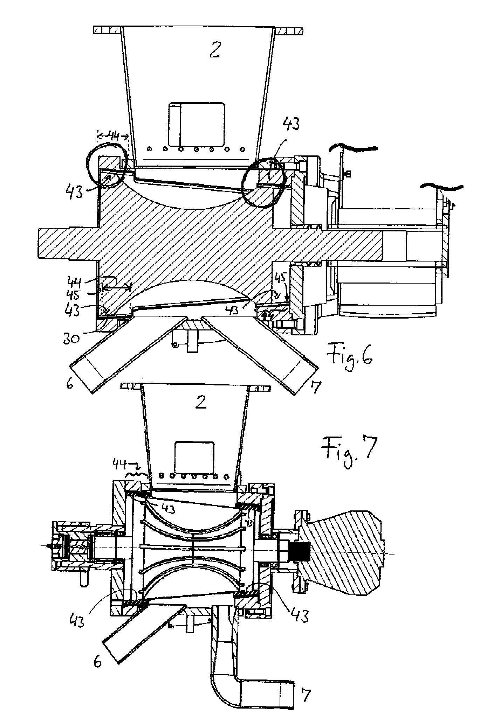

Fig. 6, 7 und 8 zeigen jeweils weitere Ausführungsformen.

### DETAILLIERTE BESCHREIBUNG EINES AUSFÜHRUNGSBEISPIELS

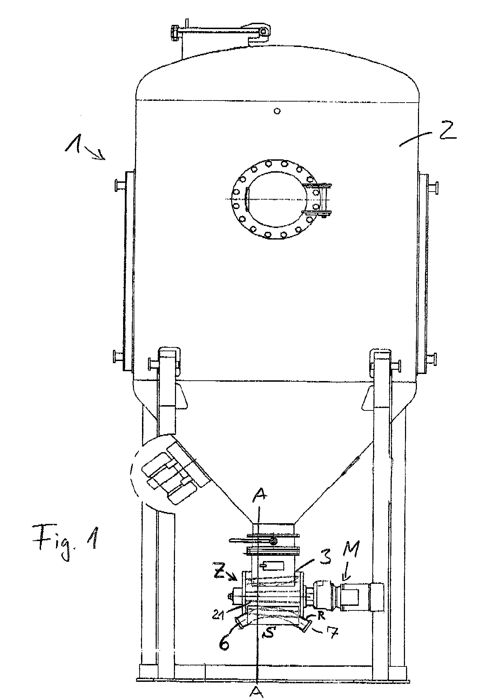

Die in Fig. 1 dargestellte Förderanlage 1 zum Fördern von Schüttgut wie etwa trockenem Spritzbeton umfasst einen Behälter 2 für das Schüttgut, der über eine Schüttgutöffnung 3 in eine Zellenradschleuse Z mündet, die ein über einen Motor M antreibbares Zellenrad 21 und eine Schüttgutausblasvorrichtung S aufweist, die einenends eine Drucklufteinlassöffnung 6 zur Beaufschlagung mit Druckluft und anderenends eine Auslassöffnung 7 für das ausgeblasene Schüttgut aufweist.

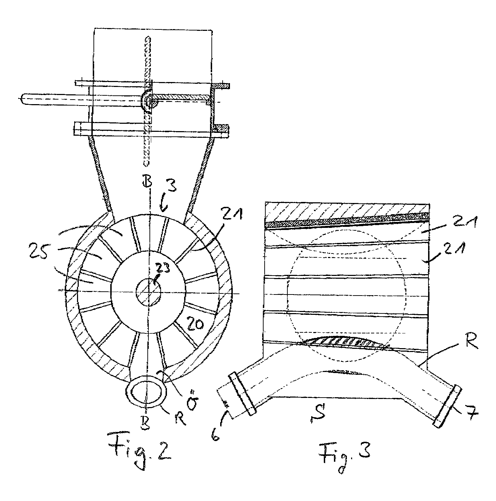

Die Zellenradschleuse Z umfasst, vgl. Fig. 2, einen Zellenradraum 20 und ein darin angeordnetes Zellenrad 21, die hier beide konisch ausgebildet und in axialer Richtung gegeneinander verschiebbar sind.

Das Zellenrad 21 weist hier eine um eine Antriebswelle 23 angeordnete Nabe auf, die Zellenwände 35 tragen kann, um den Zellenraum 20 in einzelne Zellen 25 zu unterteilen. Insbesondere im unteren Bereich kann eine Öffnung Ö vorgesehen sein, durch welche Schüttgut aus dem Zellenradraum 21 und bei entsprechender Bemaßung der Öffnung Ö aus genau einer Zelle 25 mittels der Schüttgutausblasvorrichtung S ausgeblasen werden kann.

Die Schüttgutausblasvorrichutng S kann wie dargestellt einen gebogenen Rohrabschnitt R umfassen, der einenends mit Druckluft beaufschlagbar ist und anderenends das geförderte Schüttgut liefert und dazwischen mit der Öffnung Ö verbunden ist.

Insbesondere erstreckt sich der gebogene Rohrabschnitt R teilweise in eine Zelle 25 des Zellenradraums 21 hinein, vgl. Fig. 3, und ist dort entlang des in der Figure schraffierten Bereichs weggeschnitten um bündig mit der Zellenradrauminnenwand zu verlaufen. Durch den aufgeschnittenen Bereich kann Schüttgut vom Zellenradraum 21 in den Rohrabschnitt R in Richtung auf die Auslassöffnung 7 ausgeblasen werden.

Die Zellenwände 35 können infolge des konischen Querschnitts des Zellenrads trapezförmig sein.

Eine weitere Förderanlage 1 zur Förderung von Schüttgut, insbesondere Spritzbeton, kann der Fig. 4 entnommen werden. Dort ist ein vertikaler Schnitt durch einen Behälter 2 für das Schüttgut dargestellt, an dem unterseitig eine Schüttgutöffnung 3 angeordnet ist. Die Förderanlage 1 umfasst ferner eine Schüttgut-Fördervorrichtung 4, welche eine Zulauföffnung 5, eine Drucklufteinlassöffnung 6 und eine Auslassöffnung 7 aufweist. An der Drucklufteinlassöffnung 6 ist eine Druckluftzuleitung 8 angeschlossen, welche an einen Kompressor 9 anschließbar ist. Eine Schüttgutförderleitung 10 ist an der Auslassöffnung 7 angeschlossen, durch welche das Schüttgut einer Weiterverarbeitung 11 zuführbar ist. Die Zulauföffnung 5 der Schüttgut-Fördervorrichtung 4 ist direkt an die Schüttgutöffnung 3 des Behälters 2 angeschlossen, so dass das Schüttgut durch die Wirkung der Schwerkraft in die Schüttgut-Fördervorrichtung 4 einfüllbar ist. Der Fig. 4 kann entnommen werden, dass die Druckluftzuleitung 8 und die Schüttgutförderleitung 10 derart an der Schüttgut-Fördervorrichtung 4 angeschlossen sind, dass in der Schüttgut-Fördervorrichtung 4 ein Kanal 12 gebildet wird, in dem das Schüttgut zur Förderung in der Schüttgutförderleitung 10 über die Druckluftzuleitung 8 mit Druckluft beaufschlagbar ist. Das Schüttgut wird demnach durch Schwerkraftbeschickung von oben in die Fördervorrichtung 4 eingefüllt, durch die Fördervorrichtung 4 nach unten bewegt und von dort pneumatisch aus der Vorrichtung 4 herausbefördert. Dabei bewirkt der Kanal 12, dass die Schüttgut-Fördervorrichtung 4 im Wesentlichen vollständig entleert wird und dass sich dort keine Schüttgutreste ansammeln. Auf diese Weise wird zum einen ein nahezu konstanter Schüttgut-Volumenfluss erreicht und zum anderen wird der Verschleiß der Schüttgut-Fördervorrichtung 4 dadurch reduziert, das in der Fördervorrichtung 4 nahezu keine Schüttgutrückstände nach dem Ausblasen verbleiben.

Wie der Fig. 4 zu entnehmen ist, weist der Kanal 12 eine Abwinkelung und/oder eine Krümmung auf, wobei die Krümmung vorzugsweise bogenartig ist. Der gekrümmte bzw. abgewinkelte Kanal 12 durchläuft dabei den unterseitigen Bereich der Schüttgut-Fördervorrichtung 4, so dass dieser mit Hilfe der Pneumatik nahezu vollständig ausgeblasen werden kann. Der Fig. 4 ist auch zu entnehmen, dass die Schüttgut-Fördervorrichtung 4 unterseitig sowohl an der Drucklufteinlassöffnung 6 als auch an der Auslassöffnung 7 einen Flansch 13a, 13b aufweist. Die Flansche 13a, 13b sind jeweils an Flanschen der Druckluftzuleitung 8 bzw. der Schüttgutförderleitung 10 angeschlossen. Die Flansche der Drucklufteinlassöffnung 6 (Flansch 13a) und der Auslassöffnung 7 (Flansch 13b) sind dabei unter einem stumpfen Winkel bezogen auf die Gehäuseunterseite der Schüttgut-Fördervorrichtung 4 angeschlossen. Auf diese Weise kann das Schüttgut, welches sich in dem unterseitigen Bereich der Fördervorrichtung 4 befindet, derart mit Druckluft beaufschlagt werden, dass sich der erfindungsgemäß gekrümmte bzw. geknickte Kanal 12 in der Fördervorrichtung 4 bildet. Der Fluss des Schüttgutes durch die Förderanlage 1 wird dadurch begünstigt.

Gemäß Fig. 4 ist zwischen der Druckluftzuleitung 8 und der Schüttgutförderleitung 10 eine Bypassleitung 14 angeordnet, deren Querschnitt vorzugsweise durch ein Bypassventil 15 steuerbar ist. Die Bypassleitung 14 bewirkt einen Rückfluss der Luft aus der Schüttgutförderleitung 10 in die Druckluftzuleitung 8, wodurch der Volumenfluss des Schüttgutes durch die Förderanlage 1, insbesondere durch die Schüttgutförderleitung 10, homogenisiert wird. Die gemäß Fig. 4 lediglich angedeutete Weiterverarbeitung 11 weist zweckmäßigerweise eine Flüssigkeitszugabe 39 auf, welche einen Flüssigkeitsanschluss an eine Flüssigkeitsversorgung und ein Flüssigkeitsmengenventil 40 umfasst. Vorzugsweise ist das Ventil 40 regelbar. Handelt es sich bei dem Schüttgut um Beton, so kann dieser in der Weiterverarbeitung mit Wasser zu Spritzbeton gemischt werden. Das Verhältnis Spritzbeton/ Wasser kann dabei durch das Flüssigkeitsmengenventil 40 geregelt werden.

An der Schüttgutförderleitung 10 kann vorzugsweise ein Druckwächter 16 vorgesehen sein, mit dem der Druck des pneumatisch geförderten Schüttgutes in der Schüttgutfördeleitung 10 überwacht werden kann. Fällt der Druck beispielsweise ab, so wird dies vom Druckwächter 16 erkannt und es können Maßnahmen eingeleitet werden, um den Druck wieder zu erhöhen. Diese Maßnahmen können darin bestehen, dass die Fördermenge der Schüttgut-Fördervorrichtung 4 erhöht wird, oder dass der Druck in der Druckluftzuleitung 8 erhöht wird. Dabei kann es zweckmäßig sein, wenn die Schüttgut-Fördervorrichtung 4 einen Fördermengenregler 36 aufweist. Der Fördermengenregler 36 kann wahlweise als Drehzahlregler gebildet sein oder einen solchen umfassen. Sowohl der Druckwächter 16 als auch der Fördermengenregler 36 der Schüttgut-Fördervorrichtung 4 können dabei an einem Regelmodul 17 angeschlossen sein, mit dem die Förderung regelbar und vorzugsweise automatisierbar ist. An dem Regelmodul 17 können ferner die Steuerungen des Kompressors 9, der Schüttgut-Fördervorrichtung 4, eines Dosierungsmittels 18, des Bypassventils 15 und des Flüssigkeitsmengenventils 40 der Flüssigkeitszugabe 39 der Weiterverarbeitung 11 angeschlossen sein. Das Dosierungsmittel 18 kann dabei zwischen dem Behälter 2 und der Schüttgutöffnung 3 zur Dosierung des Schüttgutes angeordnet sein. Gemäß Fig. 4 ist das Dosierungsmittel 18 als Flanschschieber gebildet. Wahlweise kann dieser Schieber motorisiert sein, so dass die Regelung der Zuflussmenge des Schüttguts in die Schüttgut-Fördervorrichtung 4 automatisierbar ist.

Der Fig. 4 ist ferner zu entnehmen, dass die Schüttgut-Fördervorrichtung 4 als Zellenradschleuse gebildet ist, die ein Gehäuse 19 mit einem rotationssymmetrischen, konsichen Zellenradraum 20 aufweist. Die Zellenradschleuse 4 umfasst eine Zulauföffnung 5 und eine Auslassöffnung 7 für das Schüttgut sowie eine im Bereich der Auslassöffnung 7 angeordnete Drucklufteinlassöffnung 6. Ferner umfasst die Zellenradschleuse 4 gemäß Fig. 4 ein im Zellenradraum 20 angeordnetes und zum Zellenradraum 20 komplementär ausgeformtes Zellenrad 21, dass mit einer zur Symmetrieachse 22 des Zellenradraumes 20 kollinear verlaufende Antriebswelle 23 drehfest verbunden ist. Das Zellenrad 21 weist dabei eine erste und eine zweite Stirnseite 24a, 24b zur Begrenzung der Zellen 25 in axialer Richtung auf. Der Umfang der ersten Stirnseite 24a ist dabei kleiner als der Umfang der zweiten Stirnseite 24b. In der Zellenradschleuse 4 ist eine Verstellvorrichtung 26 vorgesehen, mit der das Zellenrad 21 innerhalb des Zellenradraums 20 in axialer Richtung verstellbar und an die innenseitige Wand 27 des Zellenradraumes 20 anpassbar ist. Mit Hilfe dieser Verstellvorrichtung 26 kann der Anpressdruck des Zellenrades 21 in radialer Richtung durch eine Verschiebung des Zellenrades 21 in axialer Richtung an die Dichtigkeitserfordernisse der Zellenradschleuse 4 angepasst werden. So ist beispielsweise bei feinem, pulvrigem Schüttgut eine hohe Dichtigkeit der Zellen 25 des Zellenrades 21 erforderlich, während bei grobem Schüttgut die Erfordernisse an die Abdichtung der Zellen 25 gegenüber der Bewandung 27 des Zellenradraumes 20 niedriger sind. Zur Abdichtung der Zellen 25 kann die Verstellung des Zellenrades 21 in axialer Richtung dabei wahlweise kontinuierlich oder stufig erfolgen. Für die stufige Verstellung kann beispielsweise ein Rastelement vorgesehen sein, wohingegen die kontinuierliche Verstellung durch eine Anordnung mit einem Gewinde oder einer Spindel zweckmäßig sein kann.

Der Fig. 4 kann entnommen werden, dass das Gehäuse 19 der Zellenradschleuse 4 stirnseitig jeweils einen Deckel 28a, 28b aufweist, mit denen der Zellenradraum 20 verschließbar ist. In den Deckeln 28a, 28b erfolgt gleichzeitig die drehbare Lagerung der Antriebswelle 23. Zwischen den Deckeln 28a, 28b und dem Gehäuse 19 der Zellenradschleuse 4 sind Dichtungsanordnungen 29a, 29b vorgesehen, die zur Erleichterung der Wartung bei Bedarf austauschbar sind.

Gemäß Fig. 4 weist die Zellenradschleuse 4 an ihrer innenseitigen Wandung 27 des Zellenradraumes 20 eine Schicht aus einem Polymer auf. Diese Schicht kann vorzugsweise aus einem Polyuretan (PU) und/oder Polyester-Uretan-Kautschuk (AU) gebildet sein. Der Fig. 4 ist zu entnehmen, dass die Polymerschicht Bestandteil einer Hülse 30 ist, welche in dem Zellenradraum 20 innenseitig angeordnet ist, Die beschichtete Hülse 30, die aus PU, AU oder Gummi gebildet sein oder diese Stoffe umfassen kann, dient der Abdichtung der Zellen 25 der Zellenradschleuse 4 und wird durch die mechanische Beanspruchung beim Betrieb der Schleuse 4 mit der Zeit verschlissen. Es ist somit in regelmäßigen zeitlichen Abständen ein Wechsel der Abdichtung der Zellen 25 gegenüber der Innenwand 27 des Zellenradraumes 20 erforderlich. Dieser Wechsel kann nun erfindungsgemäß durch einen einfachen Austausch der beschichteten Hülse 30 erfolgen. Dazu ist lediglich der größere der beiden Deckel 28b des Gehäuses 19 zu öffnen, das Zellenrad 21 zu entnehmen und anschließend die Hülse 30 auszutauschen. Die konische Bauweise der Zellenradschleuse 4 vereinfacht dabei die Entnahme des Zellenrades 21, so dass die Wartung der Schleuse 4 erleichtert wird. Somit bedarf die erfindungsgemäße Zellenradschleuse 4 mit der Verstellvorrichtung 26 und der konisch geformten, beschichteten Hülse 30 eines deutlich geringeren Wartungsaufwands, wodurch die Standzeit der Schleuse 4 und somit der gesamten Förderanlage 1 erhöht wird.

In der Fig. 4 ist ferner zur erkennen, dass der Antriebswelle 23 ein Antrieb 31 zugeordnet ist, welcher außerhalb des Gehäuses 19 untergebracht ist. Der Antrieb 31 umfasst einen Motor 32, vorzugsweise einen Elektromotor. Außerdem sind dem Antrieb 31 ein Getriebe 33 und eine Kupplung 34 zugeordnet. Die Kupplung 34 bewirkt, dass die mechanischen Schwingungen der Zellenradschleuse 4 nicht auf den Antrieb 31 übertragen werden und umgekehrt. Auch dadurch wird der Wartungsaufwand sowohl für den Antrieb 31 als auch für die Schleuse 4 reduziert.

Die Schnittdarstellung gemäß Fig. 4 gestattet einen Einblick in das Innere zweier Zellen 25 des Zellenrades 21. Insgesamt weist das Zellenrad 21 mehrere Zellen 25 auf, die jeweils durch eine Zellenwand 35a, 35b voneinander getrennt sind. Fig. 4 zeigt eine Aufsicht auf zwei dieser Zellenwände 35a, 35b. Sie schließen außen an die Wandung 27 des Zellenradraumes 20 und innen an eine Zellenradnabe an. Zweckmäßiger sind die Zellen 25 gleichmäßig über den Umfang des Zellenrades 21 verteilt angeordnet. Dabei ist eine Gesamtzahl von mehr als 6 bzw. weniger als 16 Zellen zweckmäßig. Zur Verbesserung der Abdichtung der Zellen 25 gegenüber der Innenwand 27 des Zellenradraumes 20 kann es vorteilhaft sein, wenn die äußeren Ränder der Zellenwände 35a, 35b und die Stirnseiten 24a, 24b des Zellenrades 21 eine Beschichtung aufweisen.

Zur Erleichterung der Befüllung und der Entleerung der Zellenradschleuse 4 ist gemäß Fig. 4 die Zulauföffnung 5 oberseitig angeordnet und die Auslassöffnung 7 unterseitig. Dies ermöglicht eine einfache Schwerkraftbeschickung. Außerdem bewirkt diese direkte Anflanschung der Zellenradschleuse 4 an den Vorratsbehälter 2 der Förderanlage 1 bzw. an das Silo, dass Fremdkörper, welche sich in dem Schüttgut befinden, in das Innere der Zellenradschleuse 4 hineinfallen und somit nicht zwangsläufig an der Wandung 27 des Zellenradraumes 20 entlang geschleift werden. Die Riefenbildung an der Wandung 27 des Zellenradraums 20 wird dadurch reduziert, wodurch der Wartungsaufwand in Hinblick auf ein Auswechseln der beschichteten Hülse 30 des Zellenradraumes 20 reduziert wird. Die beschichtete Hülse 30 behält somit länger ihre dichtende Wirkung.

Der Fig. 4 ist ferner zu entnehmen, dass die Drucklufteinlassöffnung 6 so angeordnet ist, so dass sie in Richtung der Symmetrieachse 22 der Zellenradschleuse 4 einen Versatz zu der Position der Auslassöffnung 7 aufweist. Diese Anordnung von Drucklufteinlassöffnung und Auslassöffnung bewirkt, dass die Zellen in der Zellenradschleuse besser ausgeblasen werden können. Besser heißt in diesem Zusammenhang, dass sich nach dem Ausblasen aus der Zelle ein geringerer Rest an Schüttgut in der Zelle befindet. Das Volumen der Zelle wird somit besser genutzt und Verklumpungen von Schüttgut, welches in der Zelle zurückbleibt wird vermieden.

Gemäß Fig. 4 ist außerdem zu entnehmen, dass die Zellenradschleuse über Mittel 42 zur Schmierung des Zellenrades 21 verfügt. Zusätzlich dazu kann ein Modul zur Überwachung des Anpressdrucks und der Temperatur 41 des Zellenrades 21 vorgesehen sein. Bei einer zu hohen Betriebstemperatur der Zellenradschleuse 4 kann durch Verstellung der Position des Zellenrades 21 im Zellenradraum 20 die Reibung reduziert werden, wodurch die Betriebstemperatur herabgesetzt wird. Auf diese Weise kann eine Kühlung der Zellenradschleuse 4 etwa durch Wasser vollständig entfallen.

Ein Verfahren zur Förderung von Schüttgut, insbesondere von Spritzbeton, kann der schematischen Darstellung der Fig. 5 entnommen werden. Demnach wird das Schüttgut durch eine Förderungsstufe 37 über eine Schüttgutförderungsleitung 10 zu einer Weiterverarbeitungsstufe 38 gefördert. Die Förderungsstufe 37 umfasst dabei vorzugsweise eine pneumatische Förderanlage 1. In der Weiterverarbeitungsstufe 38 wird dem Schüttgut eine Flüssigkeit beigemischt. Der Druck in der Schüttgutförderleitung 10 wird durch einen Druckwächter 16 überwacht, der an ein Regelmodul 17 angeschlossen ist. Gleichzeitig regelt das Regelmodul 17 über einen Fördermengenregler 36 die Fördermenge der Förderungsstufe 37. Zusätzlich kann vorgesehen sein, dass die Beimischung der Flüssigkeit in der Weiterverarbeitungsstufe 38 durch das Regelmodul 17 derart gesteuert wird, dass das Mischungsverhältnis Flüssigkeit/Schüttgut konstant bleibt.

Der Fig. 5 ist auch ein Antrieb 31 zu entnehmen, welcher der Förderungsstufe 37 zugeordnet ist. Der Antrieb 31 ist sowohl an den Fördermengenregler 36 als auch an das Regelmodul 17 gekoppelt. Somit kann bei Bedarf die Fördermenge beispielsweise über Regelung der Drehzahl eingestellt werden. Eine der Förderungsstufe 37 zugeordnete Temperaturüberwachung 41 soll ein Überhitzen der Aggregate der Förderungsstufe 37 verhindern. Die Überwachung der Temperatur erfolgt in dem Regelmodul 17. Dort kann gemäß Fig. 5 auch die Menge der Flüssigkeit geregelt werden, die dem Schüttgut in der Weiterverarbeitungsstufe 38 beigemischt wird.

Fig. 6 und 7 illustrieren weitere Ausführungsformen der Erfindung.

In Fig. 6 sind die Stellen eingekreist, an denen die Hülse 30 eine oder mehrere Verdickungen 43 aufweist. Eine Verdickung 43 kann innen- und/oder außenseitig und/oder ringförmig entlang des Umfangs der Hülse 30 ausgebildet sein. Zweckmäßigerweise sind beidenends der Hülse 30 Verdickungen 43 vorgesehen, es kann aber auch eine sich über die gesamte Länge mit Beabstandung zum Hülsenende 45 erstreckende Verdickung vorgesehen sein. Die Verdickungen 43 können zum jeweiligen Hülsenende 45 hin beabstandet sein oder ggf. bündig mit diesem abschließen. Vorzugsweise erstrecken sich die Verdickungen 43 über Bereiche 44, in denen das Zellenrad 21 innenseitig am Zellenradraum 20 anliegt bzw. angedrückt wird. Während des Nachstellens des Zellenradraums 20 entlang der axialen Richtung verschieben sich die Stellen, an denen das Zellenrad 21 innenseitig am Zellenradraum 20 anliegt bzw. angedrückt wird, und die Bereiche 44 sind bevorzugt breit genug, so dass stets die Anlage auf der Verdickung 43 erfolgt. Die Verdickungen 43 bilden Abdichtflächen. Die Verdickungen betragen bevorzugt 0,1 bis 0,5mm und insbesondere 0,2 mm.

Die Verdickungen 43 sind vorzugsweise vom Hülsenende 45 beabstandet, z.B. um etwa 10mm. Dort kann eine Schmierung mit Öl oder dergleichen erfolgen, vorzugsweise an vier Stellen per Tropfenschmierung. Ein Eindringen von Öl in den Zellenradraum 20 ist aufgrund des Ein- bzw. Ausblasens weitgehend ausgeschlossen.

Die Ausführung der Fig. 7 sieht ein schräges Ein-, aber kein Ausblasen vor.

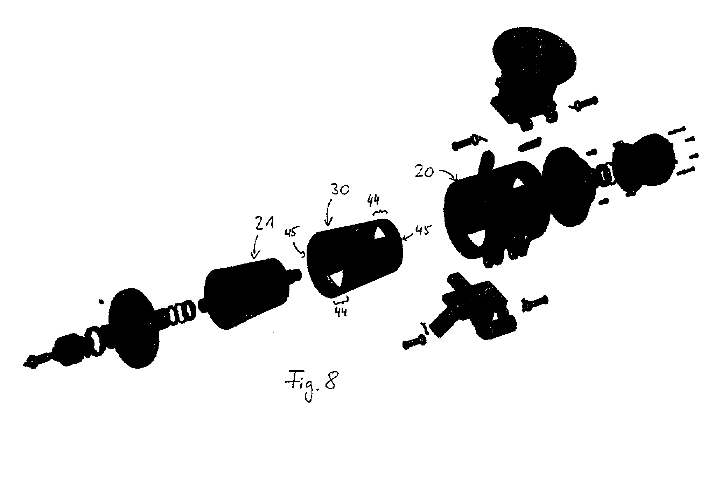

Fig. 8 zeigt eine weitere Ausführungsform und illustriert, wie die Hülse 30 zwischen Zellenradraum 20 und axial verschiebbarem Zellenrad 21 eingesetzt wird. Die Hülse ist in allen Ausführungsformen zweckmäßigerweise einstückig und stets konisch mit einem Winkel von insbesondere1 ° bis 10° und bevorzugt etwa 4°.

Ein Amperemeter oder dergleichen am Antriebsmotor kann verwendet werden zur Regelung des Anpressdrucks oder zur Feststellung des Verschleißgrads der Hülse, da der für eine Solldrehzahl erforderliche Strom mit zunehmender Reibung zunimmt. Fällt der Strom unter einen Grenzwert, kann daraus geschlossen werden, dass das Zellenrad 21 axial verschoben werden muss.

Weitere beliebig mit- und untereinander kombinierbare Ausführungsformen sind: Zellenradschleuse, bei der
- eine Öffnung (Ö) im Zellenradraum (20) vorgesehen ist, in die die Schüttgutausblasvorrichtung (S) mündet,
- die Schüttgutausblasvorrichtung (S) einen gebogenen Rohrabschnitt (R) aufweist, der einenends mit Druckluft beaufschlagbar ist und anderenends ausgeblasenes Schüttgut bereitstellt und zwischen den Enden wenigstens eine Öffnung (Ö) aufweist, die den Rohrabschnitt zum Zellenradraum (20) öffnet, um Schüttgut aus dem Zellenradraum (21) herauszublasen,
- das Zellenrad (21) mehrere Zellen (25) aufweist, die jeweils durch eine Zellenwand (35) voneinander getrennt sind, wobei die Zellenwände (35) trapezförmig sind,
- eine Verstellvorrichtung (26), mit der das Zellenrad (21) innerhalb des Zellenradraumes (20) in axialer Richtung verstellbar ist,
- die innenseitige Wandung (27) des Zellenradraumes (20) eine Schicht aus einem Polymer aufweist, vorzugsweise einem Polyuretan (PU) und/oder einem Polyester-Uretan-Kautschuk (AU),
- die Schicht Bestandteil einer Hülse (30) ist, welche in dem Zellenradraum (20) innenseitig angeordnet ist, und/oder
- ein Modul zur Überwachung des Anpressdrucks des Zellenrades (21) an die Wandung (27) des Zellenradraumes (20) vorgesehen ist.

Förderanlage (1) zur Förderung von Schüttgut, insbesondere Spritzbeton,
- mit einem Behälter (2) für das Schüttgut, einer an dem Behälter (2) unterseitig angeordneten Schüttgutöffnung (3),
- mit einer erfindungsgemäßen Zellenradschleuse (1), wobei das Schüttgut von oben in eine Zelle (25) des Zellenrads (21) einfüllbar, durch Drehung des Zellenrads (21) zur Schüttgutausblasvorrichtung (S) verlagerbar und durch die Schüttgutausblasvorrichtung (S) aus dem Zellenrad (21) ausblasbar ist,
- bei der zwischen dem Behälter (2) und der Schüttgutöffnung (3) der Zellenradschleuse (21) ein Dosierungsmittel (18) zur Dosierung des Schüttgutes angeordnet ist, das vorzugsweise als Schieber ausgebildet ist,
- bei der zwischen einer Druckluftzuleitung (8), die Druckluft der Schüttgutausblasvorrichtung (S) liefert, und einer Schüttgutförderleitung (10), in die das Schüttgut durch die Schüttgutausblasvorrichtung (S) ausgeblasen wird, eine Bypassleitung (14) angeordnet ist.
- bei der der Querschnitt der Bypassleitung (14) durch einen Bypassventil (15) steuerbar ist
- bei der eine Flüssigkeitszugabe (39) vorgesehen ist, welche einen Flüssigkeitsanschluss an eine Flüssigkeitsversorgung und ein Flüssigkeitsmengenventil (40) umfasst,
- bei der das Flüssigkeitsmengenventil (40) regel- oder steuerbar ist,
- bei der zumindest ein Druckwächter (16) vorgesehen ist, welcher vorzugsweise an der Schüttgutförderleitung (10) angeschlossen ist,
- bei der die Schüttgut-Fördervorrichtung (4) einen Fördermengenregler (36) aufweist, der vorzugsweise einen Drehzahlregler umfasst, und/oder
- bei der ein Regelmodul (17), an welchem die Steuerungen eines Kompressors (9), einer Schüttgut-Fördervorrichtung (4), eines Dosierungsmittels (18), eines Bypassventils (15), eines Flüssigkeitsmengenventils (40), eines Druckwächters (16) und/oder eines Fördermengenreglers (36) derart anschließbar sind, dass die Förderung durch das Regelmodul (17) regelbar und vorzugsweise automatisierbar ist.

Verfahren zur Förderung von Schüttgut, insbesondere von Spritzbeton, bei dem
- das Schüttgut durch eine Förderungsstufe (37) über eine Schüttgutförderleitung (10) zu einer Weiterverarbeitungsstufe (38) gefördert wird,
- die Förderungsstufe (37) vorzugsweise eine erfindungsgemäße Förderanlage (1) umfasst,
- dem Schüttgut in der Weiterverarbeitungsstufe (38) durch eine Flüssigkeitszugabe (39) eine Flüssigkeit beigemischt wird,
- der Druck in der Schüttgutförderleitung (10) durch einen Druckwächter (16) überwacht wird, der an ein Regelmodul (17) angeschlossen ist,
- das Regelmodul (17) über einen Fördermengenregler (36) die Fördermenge der Förderungsstufe (37) regelt, und/oder
- die Beimischung der Flüssigkeit in der Weiterverarbeitungsstufe (38) durch das Regelmodul (17) derart gesteuert wird, dass das Mischungsverhältnis Flüssigkeit/Schüttgut im Wesentlichen konstant bleibt.

### BEZUGSZEICHENLISTE

- 1: Förderanlage
- 2: Behälter
- 3: Schüttgutöffnung
- 4: Schüttgut-Fördervorrichtung, Zellenradschleuse
- 5: Zulauföffnung
- 6: Drucklufteinlassöffnung
- 7: Auslassöffnung
- 8: Druckluftzuleitung
- 9: Kompressor
- 10: Schüttguttörderleitung
- 11: Weiterverarbeitung
- 12: Kanal
- 13a, 13b: Flansch
- 14: Bypassleitung
- 15: Bypassventil
- 16: Druckwächter
- 17: Regelmodul
- 18: Dosierungsmittel, Flanschschieber
- 19: Gehäuse
- 20: Zellenradraum
- 21: Zellenrad

- 22: Symmetrieachse
- 23: Antriebswelle
- 24a, 24b: Stirnseiten
- 25: Zelle
- 26: Verstellvorrichtung
- 27: innenseitige Wandung
- 28a,28b: Deckel
- 29a, 29b: Dichtungsanordnung
- 30: Hülse
- 31: Antrieb
- 32: Motor
- 33: Getriebe
- 34: Kupplung
- 35a, 35b: Zellenwand
- 36: Fördermengenregler
- 37: Förderungsstufe
- 38: Weiterverarbeitungsstufe
- 39: Flüssigkeitszugabe
- 40: Flüssigkeitsmengenventil
- 41: Temperatur-überwachung
- 42: Mittel zur Schmierung
- 43: Verdickung

- M: Motor
- S: Schüttgutausblasvorrichtung
- Z: Zellenradschleuse
- R: Rohrabschnitt

## Patentansprüche

1. Zellenradschleuse (1) für Schüttgut, insbesondere Spritzbeton, mit einem Zellenradraum (20) und einem im Zellenradraum (20) angeordneten Zellenrad (21), das mit einer Antriebswelle (23) drehfest verbindbar ist, **dadurch gekennzeichnet, dass** das Zellenrad (21) und der Zellenradraum (20) konisch ausgebildet sind und eine Schüttgutausblasvorrichtung (S) vorgesehen ist.

2. Zellenradschleuse nach Anspruch 1, **dadurch gekennzeichnet, dass** die Schüttgutausblasvorrichtung (S) eine mit Druckluft zum Ausblasen des Schüttguts beaufschlagbare Drucklufteinlassöffnung (6) und eine Auslassöffnung (7) für das Schüttgut umfasst, die beabstandet voneinander im Zellenradraum (20) münden.

3. Zellenradschleuse nach Anspruch 1 oder 2, **dadurch gekennzeichnet, dass** die Schüttgutausblasvorrichtung (S) einen gebogenen Rohrabschnitt (R) aufweist, der einenends mit Druckluft beaufschlagbar ist und anderenends ausgeblasenes Schüttgut bereitstellt und zwischen den Enden wenigstens eine Öffnung (Ö) aufweist, die den Rohrabschnitt zum Zellenradraum (20) öffnet, um Schüttgut aus dem Zellenradraum (21) herauszublasen.

4. Zellenradschleuse nach einem der Ansprüche 1 bis 3, **dadurch gekennzeichnet, dass** einer Hülse (30), insbesondere nach Anspruch 14 oder 15, vorgesehen ist, im Zellenradraum (20) innenseitig angeordnet ist.

5. Zellenradschleuse nach einem der Ansprüche 1 bis 4, **dadurch gekennzeichnet, dass** das Zellenrad (21) in axialer Richtung verstellbar ist oder in axialer Richtung kontinuierlich oder stufig verstellbar ist.

6. Zellenradschleuse nach einem der Ansprüche 1 bis 5, **dadurch gekennzeichnet, dass** ein Modul zur Überwachung des Anpressdrucks des Zellenrades (21) an die Wandung (27) des Zellenradraumes (20) vorgesehen ist.

7. Förderanlage (1) zur Förderung von Schüttgut, insbesondere Spritzbeton, mit einem Behälter (2) für das Schüttgut, einer an dem Behälter (2) unterseitig angeordneten Schüttgutöffnung (3), **gekennzeichnet durch** eine Zellenradschleuse (1) nach einem der Ansprüche 1 bis 6, wobei das Schüttgut von oben in eine Zelle (25) des Zellenrads (21) einfüllbar, **durch** Drehung des Zellenrads (21) zur Schüttgutausblasvorrichtung (S) verlagerbar und **durch** die Schüttgutausblasvorrichtung (S) aus dem Zellenrad (21) ausblasbar ist.

8. Förderanlage nach Anspruch 7, **dadurch gekennzeichnet, dass** zwischen einer Druckluftzuleitung (8), die Druckluft der Schüttgutausblasvorrichtung (S) liefert, und einer Schüttgutförderleitung (10), in die das Schüttgut durch die Schüttgutausblasvorrichtung (S) ausgeblasen wird, eine Bypassleitung (14) angeordnet ist.

9. Förderanlage nach Anspruch 8, **dadurch gekennzeichnet, dass** der Querschnitt der Bypassleitung (14) steuerbar oder durch ein Bypassventil (15) steuerbar ist.

10. Förderanlage nach einem der Ansprüche 7 bis 9, **dadurch gekennzeichnet, dass** eine Flüssigkeitszugabe (39) vorgesehen ist, welche einen Flüssigkeitsanschluss an eine Flüssigkeitsversorgung und ein Flüssigkeitsmengenventil (40) oder ein regel- oder steuerbares Flüssigkeitsmengenventil (40) umfasst.

11. Förderanlage (1) nach einem der Ansprüche 7 bis 10, **gekennzeichnet durch** ein Regelmodul (17), an welchem die Steuerungen eines Kompressors (9), einer Schüttgut-Fördervorrichtung (4), eines Dosierungsmittels (18), eines Bypassventils (15), eines Flüssigkeitsmengenventils (40), eines Druckwächters (16) und/oder eines Fördermengenreglers (36) derart anschließbar sind, dass die Förderung **durch** das Regelmodul (17) regelbar und vorzugsweise automatisierbar ist.

12. Verfahren zur Förderung von Schüttgut, insbesondere von Spritzbeton, bei dem das Schüttgut durch eine Förderungsstufe (37) über eine Schüttgutförderleitung (10) zu einer Weiterverarbeitungsstufe (38) gefördert wird, **dadurch gekennzeichnet, dass** eine Förderanlage (1) insbesondere nach einem der Ansprüche 7 bis 10 zumindest als Teil der Förderungsstufe (37) verwendet wird.

13. Verfahren nach Anspruch 12, **dadurch gekennzeichnet, dass**: dem Schüttgut in der Weiterverarbeitungsstufe (38) durch eine Flüssigkeitszugabe (39) eine Flüssigkeit beigemischt wird, der Druck in der Schüttgutförderleitung (10) durch einen Druckwächter (16) überwacht wird, der an ein Regelmodul (17) angeschlossen ist, und dass das Regelmodul (17) über einen Fördermengenregler (36) die Fördermenge der Förderungsstufe (37) regelt; dass die Beimischung der Flüssigkeit in der Weiterverarbeitungsstufe (38) durch das Regelmodul (17) derart gesteuert wird, dass das Mischungsverhältnis Flüssigkeit/Schüttgut im Wesentlichen konstant bleibt; und/oder dass das Zellenrad (21) innerhalb des Zellenradraumes (20) in axialer Richtung an die Hülse (30) zur Nachführung der Abdichtung bei Verschleiß der Hülse (30) angedrückt und ggf. in axialer Richtung verschoben wird.

14. Konische Hülse (30), **dadurch gekennzeichnet, dass** sie zum innenseitigen Einsetzen in den Zellenradraum (20) einer Zellenradschleuse (1) nach einem der Ansprüche 1 bis 6 und zum Abdichten zwischen Zellenrad (21) und Zellenradraum (20) ausgestaltet ist und aus einem Gummi, einem Polymer, vorzugsweise Polyurethan (PU) oder Polyester-Urethan-Kautschuk, oder dergleichen gebildet ist oder diesen umfasst.

15. Konische Hülse nach Anspruch 14, **dadurch gekennzeichnet, dass** sie zumindest einenends eine umlaufende Verdickung (43) aufweist.
